**Europäisches Patentamt**

**European Patent Office**

**Office européen des brevets**

(19)

(11) **EP 1 666 534 A1**

(12) **EUROPÄISCHE PATENTANMELDUNG**

(43) Veröffentlichungstag:
07.06.2006 Patentblatt 2006/23

(51) Int Cl.:
*C08L 83/04* (2006.01)       *C08K 7/02* (2006.01)
*C08K 7/06* (2006.01)       *B01D 71/70* (2006.01)
*C09K 3/10* (2006.01)       *B29C 70/12* (2006.01)
*B29C 70/16* (2006.01)       *B29C 45/00* (2006.01)

(21) Anmeldenummer: 05026159.3

(22) Anmeldetag: 01.12.2005

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **03.12.2004 DE 102004058545**

(71) Anmelder: **WOCO Industrietechnik GmbH
63628 Bad Soden-Salmünster (DE)**

(72) Erfinder: **WIDMAYR, Alexander
63628 Baden Soden-Salmünster (DE)**

(74) Vertreter: **Metten, Karl-Heinz
Forrester & Boehmert,
Pettenkoferstrasse 20-22
80336 München (DE)**

(54) **Faserverstärkter Silikonkautschukformkörper, ein Verfahren zu dessen Herstellung sowie dessen Verwendung als Membran, Dichtungskörper, Ummantelung, Federkörper und Abdeckung**

(57) Die vorliegende Erfindung betrifft ein Verfahren zur Herstellung von faserverstärkten Silikonkautschukformkörpern, bei dem Flüssigsilikone in Gegenwart von Kurz- und/oder Langfasem vulkanisiert werden. Ferner betrifft die Erfindung die nach diesem Verfahren erhältlichen Silikonkautschukformkörper, insbesondere in Form kurzfaserverstärkter Membrane oder von Dichtungskörpem.

**EP 1 666 534 A1**

Printed by Jouve, 75001 PARIS (FR)

**Beschreibung**

Die vorliegende Erfindung betrifft ein Verfahren zur Herstellung faserverstärkter Silikonkautschukformkörper, die nach diesem Verfahren erhältlichen Formkörper und deren Verwendung als Membrane, Dichtungskörper, Ummantelung, Federkörper und Abdeckung.

Verstärkte Silikonkautschuke sind dem Fachmann z.B. aus DE 40 38 087 A1 bekannt. In diesem Dokument werden gewebearmierte asbestfreie Flachdichtungswerkstoffe auf der Basis anorganischer Gewebe, die mit einem Silikonkautschuk als Binder getränkt sind, beschrieben. Dieser Binder wird zur leichteren Durchdringung des Gewebes, bei welchem es sich vorzugsweise um ein solches mit Leinwandbindung handelt, als Latex eingesetzt, so daß vor dem Laminieren eine Trocknungsstufe erforderlich ist, damit beim späteren Vulkanisieren zwischen den Gewebeschichten kein Wasser mehr vorliegt. Die mit dem Binder getränkten und abgequetschten Gewebebahnen können bei einem Druck von 1 bis 10 N/mm$^2$ und einer Temperatur von 120 bis 200° C vulkanisiert werden. Die auf diese Weise enthaltenen Dichtungen zeichnen sich durch eine hohe Festigkeit gegen Scherkräfte, eine gute Rückfederung und eine hohe Gasdichtheit aus.

Wie der EP 431 881 A2 zu entnehmen ist, gehen Silikonkautschuke keine besonders innigen Verbindungen mit Substraten wie Glas, Keramik, Plastik, Fasern oder Gewebestoffen ein, weshalb häufig sogenannte Primer zur Vorbehandlung dieser Substrate eingesetzt werden. Dieses Verfahren ist jedoch material- und arbeitsaufwendig. Nach der EP 431 881 A2 wird ohne Verwendung eines Primers mit einer Vielzahl an Substraten dann ein gut haftender Kontakt mit Silikonkautschuken erhalten, wenn unter anderen zumindest anteilig auch solche Organosilane mitverwendet werden, die eine Isocyanat- und eine hydrolysierbare Gruppe im Molekül enthalten.

Der DE 37 12 830 OS ist ein Berstschutzring, bestehend aus z.B. einer Matrix aus einem Silikongummi und einem darin eingelagerten Fasermaterial aus insbesondere Glas-, Kohle- oder Aramid-Fasern, zu entnehmen. Wenn dieses Fasermaterial mehrlagig aufgewickelt und mit dem elastischen Matrixmaterial getränkt vorliegt, eignet sich der daraus erhaltene Berstschutzring für den Einsatz in Turbotriebwerken. Vorzugsweise werden für einen solchen Formkörper 20 bis 200 Faserlagen verwendet, wobei nur jede zweite Faserlage mit dem elastischen Matrixmaterial durchtränkt ist. Insoweit in der DE 37 12 830 OS keine weitergehenden Anwendungen genannt werden, darf davon ausgegangen werden, daß der offenbarte Formkörper in der Tat nur für die Konstruktion von Berstschutzringen in Turbotriebwerken geeignet ist.

Flüssigsilikonkautschuke wie das Produkt ELASTOSIL® LR der Firma Wacker-Chemie können gemäß der DE 197 29 227 A1 eingesetzt werden, um poröse Formkörper aus Silikonkautschuk zugänglich zu machen. Hierbei wird z.B. ein Agar-Gel innig mit dem Flüssigsilikonkautschuk vermengt und in einer Form auspolymerisiert. Die Spritzgießprodukte sollen toxikologisch unbedenklich sein und sich daher für Anwendungen im Medizinbereich besonders eignen.

Es wäre wünschenswert, auf verstärkte elastische Membrane zurückgreifen zu können, die ihre elastischen Membraneigenschaften auch über einen großen Temperaturbereich selbst bei Dauerbelastung nicht verlieren und gleichwohl kostengünstig herzustellen sind.

Der vorliegenden Erfindung lag daher die Aufgabe zugrunde, ein Verfahren zur Herstellung von elastischen Formkörpern sowie diese elastischen Formkörper zugänglich zu machen, die als Membrane, insbesondere im Kraftfahrzeug, eingesetzt werden können und die auf einfache, kostengünstige Weise in nur wenigen Verfahrensschritten, falls nötig auch automatisiert, zuverlässig in hoher Qualität hergestellt werden können. Der Erfindung lag insbesondere die Aufgabe zugrunde, ein Verfahren zur Herstellung faserverstärkter Membrane sowie die faserverstärkten Membrane zur Verfügung zu stellen, die auch bei Dauerbelastung ihre Dichtigkeit über einen weiten Temperaturbereich nicht verlieren und stets eine hohe Berstdruckfestigkeit aufweisen.

Erfindungsgemäß wurde ein Verfahren zur Herstellung von faserverstärkten Silikonkautschukformkörpern gefunden, bei dem man Flüssigsilikone in Gegenwart von Kurz- und oder Langfasern vulkanisiert.

Klarstellend sei festgehalten, daß Langfasern im Sinne der vorliegenden Erfindung nicht auch Endlosfasern umfassen. Während Kurzfasern im Sinne der vorliegenden Erfindung im Durchschnitt eine Länge im Bereich von etwa 0,2 bis etwa 4,5 mm, insbesondere im Bereich von etwa 1,0 mm bis etwa 3,0 mm, aufweisen, verfügen Langfasern im Durchschnitt über eine Länge im Bereich von etwa 4,5 mm bis etwa 50 mm, insbesondere von etwa 5 mm bis etwa 20 mm. Kurz- und Langfasern können im aufgespaltenen Zustand, d.h. als Einzel- bzw. Feinfaser vorliegend, über eine Feinheit im Bereich von etwa 0,5 bis 500 dtex, inbesondere von etwa 1,0 bis 200 dtex verfügen. Zufriedenstellende Ergebnisse wurden beispielsweise bei synthetischen Fasern mit einer Feinheit im Bereich von 1,0 bis 50 dtex erreicht. Besonders bevorzugt wird auf Langfasern, insbesondere mit einer Länge im Bereich von etwa 5 mm bis etwa 20 mm, besonders bevorzugt im Bereich von etwa 5 mm bis etwa 10 mm, zurückgegrif fen.

Bevorzugte Kurz- und Langfasern umfassen Natur-, Aramid-, Kohle- oder synthetische Fasern oder deren Mischungen. Geeignete Naturfasern stellen z.B. Baumwoll-, Woll-, Seiden-, Leinen-, Sisal-, Hanf-, Ramie-, Flachs- und Jutefasern oder deren Mischungen dar. Unter den geeigneten synthetischen Fasermaterialien seien exemplarisch Acetat-, Polyamid-, Polyester-, Polyolefin-, Polyvinylalkohol- und Polyurethanfasern und deren Mischungen genannt. Selbstverständlich können auch Bi- oder Trikomponentenfasern eingesetzt werden. Unter den Polyesterfasern sei die Polyethylentherephthalatfaser hervorgehoben. Besonders bevorzugt wird auf Polyamid- und Polyesterfasern für die gemäß der vorliegenden Erfindung zum Einsatz kommenden Kurz- und Langfasern zurückgegriffen. Alternativ oder zusätzlich können auch Glasfasern in Form von Kurz- und/oder Langfasern in dem erfindungsgemäßen Verfahren eingesetzt werden.

In einer bevorzugten Ausführungsform wird die Menge an Kurz- und/oder Langfasern derart gewählt, daß in dem Silikonkautschukformkörper etwa 1 bis 30 Gew.-%, insbesondere etwa 2 bis 15 Gew.-%, an solchen Fasern vorliegen.

Faserverstärkte Silikonkautschukformkörper mit einem besonders vorteilhaften Eigenschaftsprofil werden auch dadurch erhalten, daß die Kurz- und/oder Langfasern in dem vulkanisierten Formkörper im Durchschnitt zu wenigstens 85%, insbesondere im wesentlichen vollständig, aufgespalten vorliegen.

Kurz- und Langfasern im Sinne der vorliegenden Erfindung werden im allgemeinen als Schnittfasern erhalten. Aufgrund der Herstellverfahren, die bei solchen Schnittfasern zur Anwendung kommen, liegen diese Fasern zunächst häufig in Form von sogenannten Schnittbündeln vor. Je höher im allgemeinen der Anteil an Schnittbündeln in einem Formkörper ist, um so schlechter sind dessen mechanische Eigenschaften. Sofern die erhaltenen Kurz- oder Langfasern ein hohes Maß an Bündeligkeit aufweisen, wird daher vorliegend vor deren Zugabe zum Flüssigsilikon in der Regel eine mechanische Zerfaserung bzw. Auflösung der Schnittbündel vorgenommen. Hierfür kann auf bekannte industrielle Mühlentechnik zurückgegriffen werden. Für die Bestimmung des Grades an Aufspaltung der eingesetzten Kurz- oder Langfasern kann auf das Prinzip der Luftstromprüfung an Faserpfropfen, wie bei Karlheinz Geltel, Zur Theorie der Luftströmung durch Faserpfropfen, Faserforschung und Textiltechnik 16 (1964) Heft 1, Seiten 21 bis 29, beschrieben, zurückgegriffen werden. Danach ist der Druckabfall über einer durchströmten Fasermenge abhängig von der strömenden Luftmenge je Zeiteinheit, den Abmessungen der Meßkammer (Durchmesser, Höhe), der Viskosität des strömenden Mediums, der Porosität der Fasermenge und der Faseroberfläche (Faserfeinheit). Die Porosität der Fasermenge kennzeichnet das Verhältnis von Fasermasse in der Meßkammer und dem Meßkammervolumen und ist festgelegt durch die Beziehung:

$$\varepsilon = 1 - \frac{M}{Vxd}$$

worin die Parameter die folgende Bedeutung haben:

$\varepsilon$     Porosität,
M    Masse der Probe,
V    Volumen der Meßkammer und

d    Dichte des Faserstoffes.

Hält man die Luftmenge, Meßkammerabmessung, Viskosität des strömenden Mediums und die Porosität konstant, so ist der Druckabfall über der Probe direkt proportional der Faseroberfläche. Die Faseroberfläche wird wiederum durch die Feinheit sowie das mehr oder weniger häufige Auftreten von Schnittbündeln bestimmt. Demgemäß wird die Faseroberfläche um so niedriger, je mehr und um so größere Schnittbündel auftreten, was wiederum bedeutet, daß der Druckabfall über der Probe proportional der Größe und der Häufigkeit der Schnittbündel und damit auch der Vollständigkeit der Aufspaltung ist. Für die Bestimmung des Grades an Aufspaltung der Fasern kann z.B. ein Wollfeinheitsprüfer vom Typ 4/15/1 der Firma Medimpex eingesetzt werden.

Geeignete Flüssigsilikone gehen auf Polyorganosiloxane als Grundpolymer zurück. Hierin liegen Siloxanketten (-Si-O-Si-O-) vor, in denen die freien Valenzen der Si-Atome durch organische Gruppen wie Wasserstoff, Methyl, Phenyl oder Vinyl und auch durch Hydroxylgruppen abgesättigt sein können. Flüssigsilikone (Liquid silicon rubber/LSR) verfügen im allgemeinen über bis zu 1.000 Wiederholungseinheiten und grenzen sich damit von Festsilikonkautschuken ab, die in der Regel 6.000 bis 10.000 Wiederholungseinheiten aufweisen. Die Vernetzungs- bzw. Vulkanisationsreaktion findet regelmäßig zwischen einer Silan (Si-H) und einer Vinylgruppe im Wege einer übergangsmetallkatalysierten Hydrosilylierung statt. Flüssigsilikone basieren im allgemeinen auf Zweikomponentenmischungen aus niedrigviskosen Vinylpolysiloxanen einerseits und wasserstofffunktionellen Polysiloxanen und/oder Silanverbindungen andererseits. Besonders geeignete Katalysatoren basieren auf Edelmetallverbindungen. Bevorzugt wird auf Platinkatalysatoren zurückgegriffen, wobei in der Regel Mengen im ppm-Bereich für eine schnelle und vollständige Vulkanisation ausreichen. Diese Additionsvernetzung, bei der regelmäßig kein Spalt- oder Nebenprodukt entsteht, verbindet katalysatorunterstützt vinylfunktionelle Polysiloxane mit wasserstofffunktionellen Polysiloxanen bzw. Silanverbindungen. Während die erste Komponente dieses Zweikomponentensystems, z.B. Komponente A, den Katalysator enthält, vorzugsweise zusammen mit dem vinylfunktionellen Polysiloxan, umfaßt die weitere Komponenten, z.B. Komponente B, das wasserstofffunktionelle Polysiloxan bzw. die Silanverbindung als Vernetzeragens. Als besonders geeignete wasserstofffunktionelle Siloxan- bzw. Silanverbindung sei Methylhydrogensiloxan, insbesondere enthaltend mindestens drei SiH-Gruppen im Molekül, genannt.

Geeignete Flüssigsilikone bzw. geeignete Zweikomponentensysteme für Flüssigsilikone sind dem Fachmann bekannt und auch kommerziell erhältlich, beispielsweise unter der Produktbezeichnung Silopren® LSR der Firma GE Bayer Silicons oder unter der Bezeichnung Elastosil® LR der Firma Wacker-Chemie.

Besonders bevorzugt wird auf sogenannte selbsthafende Flüssigsilikone zurückgegriffen. Hierbei handelt es sich um Flüssigsilikonmaterialien, die bereits mit einem Primer versetzt sind. Solche Zusammensetzungen sind beispielsweise unter der Produktbezeichnung Silopren LSR 27-52 von der Firma GE Bayer Silicons oder unter der Produktbezeichnung Elastosil 3070 von der Firma Wacker Chemie erhältlich.

Die Vernetzungs- bzw. Vulkanisationsgeschwindigkeit läßt sich z.B. über die Katalysatorkonzentration und/oder über die Zugabe eines Inhibitors steuern. Geeignete Inhibitoren stellen z.B. höherkettige Alkohole dar, wie z.B. n-Butanol, n-Pentanol oder n-Hexanol. Insbesondere sei auch auf 1-Ethinyl-1-cyclohexanol verwiesen.

Besonders bevorzugt wird als Flüssigsilikon auf MVQ-Flüssigsilikon zurückgegriffen. Hierbei handelt es sich um einen Methylsiloxankautschuk mit mindestens einer, insbesondere mehreren Vinylgruppen. Selbstverständlich können ebenfalls z.B. partiell fluorierte Polysiloxane eingesetzt werden.

Gemäß einer weiteren Ausführungsform ist vorgesehen, daß die Vulkanisation ferner in Gegenwart von Farbstoffen/Pigmenten, Füllstoffen, Antiklebmittel, Weichmachern, Haftvermittlern oder deren Mischungen erfolgt.

Geeignete Füllstoffe umfassen z.B. Kreide, Quarzmehl, Diatomeenerde, Glimmer, Kaolin, Al(OH)$_3$ und/oder Metalloxide. Ferner stellt pyrogene Kieselsäure einen geeigneten Füllstoff dar.

Dabei kann vorgesehen sein, daß das Flüssigsilikon, enthaltend die Kurz- und/oder Langfasern und gegebenenfalls Farbstoffe oder Pigmente, Antiklebemittel, Weichmacher, Haftmittel und/oder Füllstoffe, mittels Spritzgießens in ein Formwerkzeug eingetragen wird. Die Vulkanisation findet dann im wesentlichen in diesem Formwerkzeug statt.

Geeignete Flüssigsilicon- bzw. LSR-Spritzgießvorrichtungen sind dem Fachmann bekannt. Beispielsweise kann auf eine Spritzgießvorrichtung, enthaltend einen Kaltkanalblock, wie in der DE 40 14 244 A1 beschrieben, zurückgegriffen werden. Insbesondere zur Vermeidung von Druckschwankungen im Bereich der Einzugszone der Plastifiziereinheit beim Spritzgießen von Flüssigsilikonkautschuken kann auch die in der DE 101 45 160 A1 beschriebene Spritzgießvorrichtung eingesetzt werden. Um dem Problem der verstopften Düsen beim Spritzgießen von Flüssigsilikonen zu begegnen, bietet sich ebenfalls die in der DE 103 06 027 A1 beschriebene Spritzgießvorrichtung an.

Die Vulkanisation erfolgt üblicherweise bei Temperaturen im Bereich von 140 bis 230° C, insbesondere 170 bis 220° C.

Die Komponenten des Zweikomponentenflüssigsilikonssystems werden üblicherweise derart eingestellt, daß sie in dem Verhältnis 1:1 in die Spritzgießvorrichtung eingetragen werden. Der Druck im Spritzgießgerät liegt im allgemeinen im Bereich von etwa 50 bis 150 bar, wobei der Haltedruck an der Spritzdüse häufig auf einen Wert von etwa 50 bar eingestellt wird. Aufgrund der Hitze im Formwerkzeug und der Volumenzunahme bei der einsetzenden Vulkanisationsreaktion stellen sich dort Spitzendrücke von bis zu 300 bar ein.

Gemäß einem weiteren Aspekt des erfindungsgemäßem Verfahren kann vorgesehen sein, daß die Kurz- und/oder Langfasern a) vermengt mit Farbstoffen oder Pigmenten, Antiklebmitteln, Weichmachern, Haftmitteln und/oder Füllstoffen zum Flüssigsilikon, insbesondere zur Komponente A und/oder Komponente B, b) zu der Komponente A und/oder der Komponente B, und/oder c) zu der Mischung aus Komponente A und Komponente B gegeben werden.

Beispielsweise können die Kurz- und/oder Langfasern separat in die Farbkomponente eingemischt werden und zusammen mit dieser z.B. der ersten Komponente (Komponente A) und/oder der zweiten Komponente (Komponente B) des Flüssigsiliconsystems zugegeben werden. Alternativ oder zusätzlich kann diese Mischung aus Kurz- und/oder Langfasern sowie Farbkomponente auch in einem Materialmischblock mit den zwei Komponenten des Flüssigsilikonsystems vermischt werden. Grundsätzlich ist es von Vorteil, wenn die Kurz- und/oder Langfasern möglichst homogen verteilt im Flüssigsilikon vor Eintritt in die Spritzgießvorrichtung vorliegen.

Die Dimensionen des erfindungsgemäßen faserverstärkten Silikonkautschukformkörpers sind in weiten Bereichen variierbar. Beispielsweise lassen sich faserverstärkte Membrane mit durchschnittlichen Dicken im Bereich von etwa 0,1 bis 1,0 cm ohne weiteres erhalten.

Die nach dem erfindungsgemäßen Verfahren erhaltenen faserverstärkten Silikonkautschukformkörper zeichnen sich durch eine sehr homogene Struktur aus und können vielfältigst eingesetzt werden, z.B. als faserverstärkte Membrane oder Dichtungskörper. Derartige faserverstärkte Membrane eignen sich wiederum als Aktuatoren, z.B. bei der Drosselklappensteuerung im Kfz. Geeignete Dichtungskörper können z.B. in Form von Dichtungsringen wie O-Ringen, Dichtungsklappen oder Dichtungsscheiben vorliegen. Aufgrund der vorteilhaften Eigenschaften der erfindungsgemäßen Kautschukformkörper, wie Federelastizität, Inertheit, Robustheit, Dauerbelastbarkeit sowie homogener innerer Struktur und isotropem mechanischen Verhalten, sind deren Einsatzmöglichkeiten bzw. -felder, beispielsweise betreffend Membrane und Dichtungen, nahezu unbegrenzt. Besonders bevorzugte Anwendungen stellen beispielsweise Aktuatormembrane, Membrane für Bremskraftverstärker sowie Abgashalteschlaufen dar.

Selbstverständlich können die erfindungsgemäßen faserverstärkten Silikonkautschukformkörper nicht nur für jedwede Membrane verwendet werden, sondern finden darüber hinaus vielfältige Einsatzmöglichkeiten z.B. bei der Abdichtung von Metallteilen, insbesondere bei der Abdichtung von mit Kunststoff umspritzten Metallteilen oder auch als Gehäuseabdeckung, Kabelummantelungen, Verteilerkappen oder Dichtungsringen. Darüber hinaus können die erfindungsgemäßen Silikonkautschukformkörper auch als Federkörper, z.B. in Form von Elastomerfedern, Luftfederbälgen und Industriefedern, sowie als Bälge, z.B. als, insbesondere hoch beanspruchbare, Faltenbälge oder Luftfederbälge, eingesetzt werden. Ferner eignen sich die erfindungsgemäßen Kautschukformkörper zur Herstellung von Aufhängungen, z.B. Abgasaufhängungen im Kfz, von Schlaufen, beispielsweise Sicherungsschlaufen, und von Zugentlastungen.

Schließlich umfassen die erfindungsgemäßen faserverstärkten Silikonkautschukformkörper auch oberflächenbehandelte Substrate, insbesondere mit einem Plasma behandelte Formkörper, wie in der DE 102 56 483 A1 beschrieben. Hierbei wird die Oberfläche des Flüssigsilikonkautschukformkörpers einem durch eine elektrische Gasentladung im Vakuum erzeugten Plasma ausgesetzt, wobei die Energie und die Einwirkdauer des Plasmas auf die Oberfläche des Substrats so gewählt werden, daß sich die Oberflächenenergie der Substratoberfläche aufgrund der Modifizierung von oberflächennahen Molekülen signifikant erhöht, wobei die auf diese Art und Weise oberflächenbehandelten Substrate aus Silikon direkt beschichtet werden können. Die Gasentladung stellt vorzugsweise eine DC-, AC-, HF-, RF- oder Mikrowellengasentladung, vorzugsweise eine DC-Gasentladung, dar.

Die erfindungsgemäßen verstärkten Silikonkautschukformkörper, insbesondere in Form von beispielsweise faserverstärkten Membranen, zeichnen sich gegenüber Membranen aus verstärktem herkömmlichen Silikonmaterial durch eine beispielsweise mehr als doppelt so hohe Dehnbarkeit (z.B. bei einem Druck von 2,5 MPa) bei gleichzeitig sehr hoher Reißfestigkeit aus. So weisen erfindungsgemäße faserverstärkte Membrane z.B. eine Reißfestigkeit von 100% und mehr auf, beispielsweise bei einem Faseranteil im Bereich von 2 bis 5 Gew.-% an Langfasern, insbesondere solchen mit einer Länge im Bereich von 5 bis etwa 20 mm, vorzugsweise 5 bis 10 mm. Die vorangehend genannten Werte und Prüfkomponenten können gemäß VDA 675 205 ermittelt werden.

Der vorliegenden Erfindung liegt die überraschende Erkenntnis zugrunde, daß auf relativ einfache Weise mehr oder weniger einstufig faserverstärkte Silikonkautschuke erhalten werden können. Gegenüber der Herstellung gewebeverstärkter Silikonmembrane, die regelmäßig Peroxid-initiiert vulkanisiert werden, entfällt nicht nur die Herstellung eines geeigneten Gewebes, sondern ebenfalls der Stanzvorgang zur Erhaltung des gewünschten Formkörpers. Auch ist der Einsatz von Primern nicht nötig. Die erfindungsgemäßen faserverstärkten Silikonkautschukformkörper, wenn als Membran vorliegend, zeichnen sich durch eine sehr hohe Berstdruckfestigkeit auch im Dauertest aus, sind sehr temperaturbeständig und zudem extrem dicht. Schließlich sind die erfindungsgemäßen faserverstärkten Silikonkautschukformkörper wesentlich kostengünstiger zu fertigen als gewebeverstärkte Membrane nach dem Stand der Technik.

Nachfolgend wird das Verfahren der vorliegenden Erfindung an einem Beispiel im Detail ausgeführt.

Als Langfasern werden Polyamidfasern mit einer Einzelfaserfeinheit von etwa 6,7 dtex und einer durchschnittlichen Länge von 5 mm eingesetzt. Diese Langfasern können aus einem Filamentgarn PA hf 1400dtex f 210 der Firma Acordis Industrie Fibers mit Hilfe einer Fallmesserschneidmaschine Pierre T G 28 L1 erhalten werden. Das geschnittene Fasermaterial wird in einer Mühle der Firma Retsch vollständig, d.h. zu im wesentlichen 100% aufgespalten.

Ein geeignetes Flüssigsilikon stellt z.B. das Produkt ELASTOSIL® LR3003/50 der Firma Wacker-Chemie dar. Hierbei handelt es sich um ein Zweikomponenten-Flüssigsilikon vom MVQ-Typ. Die beiden Komponenten des Flüssigsilikonproduktes ELASTOSIL® LR werden mit insgesamt 10 Gew.% an vorangehend genannten Polyamidfasern, bezogen auf die eingesetzte Menge an Flüssigsilikonen, in einem separaten Materialmischblock zusammengeführt, homogen vermengt und anschließend einer handelsüblichen LSR-Spritzgießvorrichtung zugeführt. Der Druck in der Spritzgießvorrichtung beträgt etwa 100 bar. Die Temperatur im Spritzgießwerkzeug liegt bei Raumtemperatur. Für das Formwerkzeug wird eine Temperatur von etwa 200°C eingestellt. Bereits nach einer Vulkanisationsdauer von nur etwa 5 Sekunden pro mm Wandstärke kann eine vollständig vernetzte bzw. vulkanisierte Membran erhalten werden.

Mit dem erfindungsgemäßen Verfahren lassen sich demgemäß, anders als bei der Herstellung gewebeverstärkter Kautschuke, sehr kurze Zykluszeiten verwirklichen.

Die in der voranstehenden Beschreibung sowie in den Ansprüchen offenbarten Merkmalen der Erfindung können wohl einzeln als auch in jeder beliebigen Kombination für die Verwirklichung der Erfindung in ihren verschiedenen Ausführungsformen wesentlich sein.

**Patentansprüche**

1.  Verfahren zur Herstellung von faserverstärkten Silikonkautschukformkörpern, **dadurch gekennzeichnet, daß** man Flüssigsilikone in Gegenwart von Kurz- und/ oder Langfasern vulkanisiert.

2.  Verfahren nach Anspruch 1, **dadurch gekennzeichnet, daß** die Kurzfasern im Durchschnitt eine Länge im Bereich von etwa 0,2 bis etwa 4,5 mm, insbesondere im Bereich von etwa 1,0 mm bis etwa 3,0 mm, und daß die Langfasern im Durchschnitt eine Länge im Bereich von etwa 4,5 mm bis etwa 50 mm, insbesondere von etwa 5 mm bis etwa 20 mm, aufweisen.

3.  Verfahren nach Anspruch 1 oder 2, **dadurch gekennzeichnet, daß**
    die Kurz- und/oder Langfasern Natur-, Aramid-, Kohle- oder synthetische Fasern oder deren Mischungen umfassen.

4.  Verfahren nach einem der vorangehenden Ansprüche, **dadurch gekennzeichnet, daß** die Menge an Kurz- und/oder Langfasern derart gewählt wird, daß in dem Silikonkautschukformkörper etwa 1 bis 30 Gew.-%, insbesondere etwa 2 bis 15 Gew.-%, an solchen Fasern vorliegen.

5.  Verfahren nach einem der vorangehenden Ansprüche, **dadurch gekennzeichnet, daß** die Kurz- und/oder Langfasern in dem vulkanisierten Formkörper im Durchschnitt zu wenigstens 85%, insbesondere im wesentlichen vollständig, aufgespalten vorliegen.

6.  Verfahren nach einem der vorangehenden Ansprüche, **dadurch gekennzeichnet, daß** das Flüssigsilikon ein MVQ-Flüssigsilikon umfaßt.

7.  Verfahren nach einem der vorangehenden Ansprüche, **dadurch gekennzeichnet, daß** die Vulkanisation über eine katalysierte Additionsvernetzung erfolgt.

8.  Verfahren nach einem der vorangehenden Ansprüche, **dadurch gekennzeichnet, daß** die Vulkanisation ferner in Gegenwart von Farbstoffen/Pigmenten, Füllstoffen, Antiklebmittel, Weichmachern, Haftvermittlern oder deren Mischungen erfolgt.

9.  Verfahren nach einem der vorangehenden Ansprüche, **dadurch gekennzeichnet, daß** das Flüssigsilikon ein Zweikomponentensystem darstellt, umfassend eine Komponente A, enthaltend mindestens einen Katalysator, und eine Komponente B, enthaltend mindestens eine Verbindung mit mindestens einer Silizium/Wasserstoff-Bindung.

10. Verfahren nach einem der vorangehenden Ansprüche, **dadurch gekennzeichnet, daß** das Flüssigsilikon, enthaltend die Kurz- und/oder Langfasern und gegebenenfalls Farbstoffe oder Pigmente, Antiklebemittel, Weichmacher, Haftmittel und/oder Füllstoffe, mittels Spritzgießens in ein Formwerkzeug eingetragen wird.

11. Verfahren nach Anspruch 9 oder 10, **dadurch gekennzeichnet, daß**
    die Kurz- und/oder Langfasern a) vermengt mit Farbstoffen oder Pigmenten, Antiklebmitteln, Weichmachern, Haftmitteln und/oder Füllstoffen zum Flüssigsilikon, insbesondere zur Komponente A und/oder Komponente B, b) zu der Komponente A und/oder der Komponente B, und/oder c) zu der Mischung aus Komponente A und Komponente B gegeben werden.

12. Faserverstärkter Silikonkautschukformkörper, erhalten nach einem der vorangehenden Ansprüche.

13. Faserverstärkter Silikonkautschukformkörper nach Anspruch 12, **dadurch gekennzeichnet, daß**
    dieser Formkörper eine Membran, insbesondere Arbeitsmembran, einen Dichtungskörper, insbesondere einen O-Ring, einen Federkörper, einen Balg, eine Aufhängung, eine Zugentlastung oder einen Schlaufenkörper, insbesondere eine Sicherungsschlaufe, darstellt oder Bestandteil hiervon ist.

14. Faserverstärkter Silikonkautschukformkörper nach Anspruch 13, **dadurch gekennzeichnet, daß**
    dieser Formkörper als Membrane eine durchschnittliche Membrandicke im Bereich von etwa 0,1 bis 1,0 cm aufweist.

15. Verwendung der faserverstärkten Silikonkautschukformkörper nach Anspruch 12 zur Herstellung von einer Membran, insbesondere einer Arbeitsmembran, einem Dichtungskörper, insbesondere einem O-Ring, einem Federkörper, einem Balg, einer Aufhängung, einer Zugentlastung oder einem Schlaufenkörper.

**Europäisches
Patentamt**

**EUROPÄISCHER RECHERCHENBERICHT**

Nummer der Anmeldung

EP 05 02 6159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 692 549 A5 (LONSTROFF-BTR AG AARAU) 31. Juli 2002 (2002-07-31)<br><br>* Spalte 2, Zeilen 38-51 *<br>* Spalte 3, Zeilen 3-11,44-51; Ansprüche *<br>----- | 1,3,4,7,<br>8,10-13,<br>15 | C08L83/04<br>C08K7/02<br>C08K7/06<br>B01D71/70<br>C09K3/10<br>B29C70/12 |
| X | US 3 317 455 A (BLOME JAMES C ET AL) 2. Mai 1967 (1967-05-02)<br>* Spalte 3, Zeile 38 - Spalte 4, Zeile 20; Beispiel 1 *<br>* Ansprüche 1,2,4 *<br>----- | 1,4,6-9,<br>11,12 | B29C70/16<br>B29C45/00 |
| X | EP 0 937 744 A (NIPPON OIL CO. LTD) 25. August 1999 (1999-08-25)<br>* Absätze [0024], [0025], [0032], [0050], [0054], [0058]; Beispiel 1 *<br>* Ansprüche 1,4,6 *<br>----- | 1-4,7,8,<br>12,14 | |
| X | DE 43 23 856 A1 (HUBER + SUHNER AG KABEL-, KAUTSCHUK-, KUNSTSTOFF-WERKE, PFAEFFIKON, CH) 27. Januar 1994 (1994-01-27)<br>* Spalte 2, Zeile 25 *<br>* Spalte 5, Zeile 52 - Spalte 6, Zeile 22 *<br>* Ansprüche 1,3-5,9 *<br>----- | 1-5,<br>12-15 | RECHERCHIERTE SACHGEBIETE (IPC) |
| X | US 4 076 684 A (WOHLFARTH ET AL) 28. Februar 1978 (1978-02-28)<br>* Ansprüche 1,6-9; Beispiel 3 *<br>----- | 1,4,7,8,<br>12 | C08L<br>C08K<br>B01D<br>C09K<br>B29C |

Der vorliegende Recherchenbericht wurde für alle Patentansprüche erstellt

| Recherchenort | Abschlußdatum der Recherche | Prüfer |
|---|---|---|
| München | 10. Januar 2006 | Hein, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 02 6159

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2006

| Im Recherchenbericht angeführtes Patentdokument | Datum der Veröffentlichung | Mitglied(er) der Patentfamilie | Datum der Veröffentlichung |
|---|---|---|---|
| CH 692549 A5 | 31-07-2002 | KEINE | |
| US 3317455 A | 02-05-1967 | KEINE | |
| EP 0937744 A | 25-08-1999 | KEINE | |
| DE 4323856 A1 | 27-01-1994 | CH 687969 A5 | 15-04-1997 |
| US 4076684 A | 28-02-1978 | AT 355804 B | 25-03-1980 |
| | | AT 923876 A | 15-08-1979 |
| | | BE 849354 A1 | 13-06-1977 |
| | | CA 1093239 A1 | 06-01-1981 |
| | | CH 603743 A5 | 31-08-1978 |
| | | DE 2556420 A1 | 16-06-1977 |
| | | FR 2335560 A1 | 15-07-1977 |
| | | GB 1556771 A | 28-11-1979 |
| | | IT 1069954 B | 25-03-1985 |
| | | JP 52072756 A | 17-06-1977 |
| | | NL 7612721 A | 17-06-1977 |

EPO FORM P0461

Für nähere Einzelheiten zu diesem Anhang : siehe Amtsblatt des Europäischen Patentamts, Nr.12/82